(19) Europäisches Patentamt
European Patent Office
Office européen des brevets

(11) **EP 2 869 256 A1**

(12) **EUROPEAN PATENT APPLICATION**

(43) Date of publication:
06.05.2015 Bulletin 2015/19

(51) Int Cl.:
***G06Q 30/02*** *(2012.01)*

(21) Application number: 14190999.4

(22) Date of filing: 30.10.2014

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: 04.11.2013 US 201314070817

(71) Applicant: **ViXS Systems Inc.**
**Toronto, ON M2K 1E3 (CA)**

(72) Inventors:
• **Daub, Sally Jean**
**Toronto, Ontario M59 1R9 (CA)**
• **Laksono, Indra**
**Richmond Hill, Ontario L4B 4V2 (CA)**

(74) Representative: **Benson, Christopher et al**
**HGF Limited**
**4th Floor, Merchant Exchange**
**17-19 Whitworth Street West**
**Manchester M1 5WG (GB)**

(54) **Targeted advertising based on physical traits and anticipated trajectory**

(57) A computer-implemented method includes selecting a targeted advertisement based on at least one physical trait of an intended recipient and determining an anticipated trajectory of the intended recipient from a first location based on an observation of the intended recipient at the first location. The method further includes presenting the targeted advertisement for the intended recipient at a second location selected based on the anticipated trajectory. Presenting the targeted advertisement for the intended recipient at the second location can include identifying an advertisement presentation device that is, or will be, available along the anticipated trajectory of the intended recipient, the advertisement presentation device serving the second location, determining an estimated arrival time of the intended recipient at the second location based on the anticipated trajectory, and queuing the targeted advertisement for presentation by the advertisement presentation device based on the estimated arrival time.

302 — OBSERVE POTENTIAL RECIPIENT(S) AT INITIAL OBSERVATION LOCATION

304 — DETERMINE PHYSICAL TRAITS OF OBSERVED POTENTIAL RECIPIENTS

306 — MULTIPLE POTENTIAL RECIPIENTS OBSERVED?
YES → 308 — SELECT INTENDED RECIPIENT
NO

310 — SELECT TARGETED ADVERTISEMENT BASED ON PHYSICAL TRAITS

312 — DETERMINE ANTICIPATED TRAJECTORY

314 — IDENTIFY ADVERTISEMENT PRESENTATION DEVICE ALONG ANTICIPATED TRAJECTORY

316 — ESTIMATE ARRIVAL TIME AT LOCATION OF ADVERTISEMENT PRESENTATION DEVICE

318 — SCHEDULE PRESENTATION OF TARGETED ADVERTISEMENT

320 — PRESENT TARGETED ADVERTISEMENT PER SCHEDULE

REPEAT FOR MULTI-PART ADVERTISEMENT

300

**FIG. 3**

EP 2 869 256 A1

**Description**

FIELD OF THE DISCLOSURE

The present disclosure generally relates to advertising and other message display systems.

BACKGROUND

Advertising in public spaces and other communal areas typically is directed to a broad spectrum of anticipated consumers. However, the non-specificity of the intended recipient of the advertising limits its effectiveness in such circumstances. Attempts at targeting advertisements to particular consumers - such as through the use of a camera to identify the gender of a person standing in front of a display screen and then displaying a gender-targeted advertisement at the display screen- require the intended recipient to remain in the same location for sufficient time both to be characterized and to receive the targeted advertisement. Given the highly transitory nature of people in communal areas, this condition is rarely met, and thus conventional targeted advertisement approaches for communal spaces demonstrate limited success.

BRIEF DESCRIPTION OF THE DRAWINGS

The present disclosure may be better understood, and its numerous features and advantages made apparent to those skilled in the art by referencing the accompanying drawings.

FIG. 1 is a block diagram illustrating an advertisement presentation system utilizing a recipient's physical traits and anticipated trajectory for targeted advertisements in accordance with at least one embodiment of the present disclosure.

FIG. 2 is a block diagram illustrating an advertisement server in accordance with at least one embodiment of the present disclosure.

FIG. 3 is a flow diagram illustrating a method for targeted advertisement selection and presentation in accordance with at least one embodiment of the present disclosure.

FIG. 4 is a diagram illustrating an example implementation of a targeted advertisement selection and presentation process in accordance with at least one embodiment of the present disclosure.

FIG. 5 is a diagram illustrating another example implementation of a targeted advertisement selection and presentation process in accordance with at least one embodiment of the present disclosure.

DETAILED DESCRIPTION

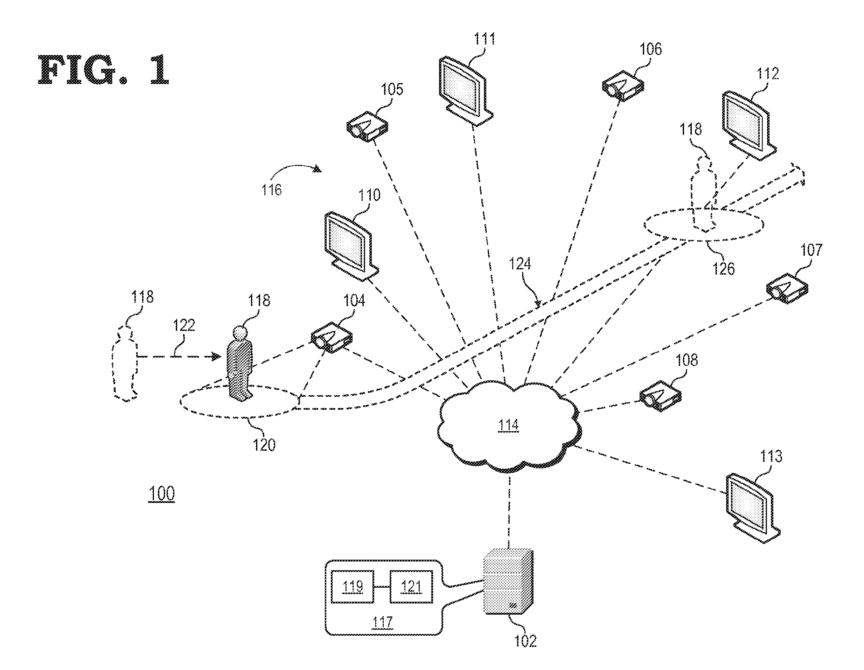

FIGS. 1-5 illustrate example techniques for the selection and presentation of targeted advertising based on the detection of an intended recipient's physical traits and anticipated trajectory. In at least one embodiment, at least one recipient observation device of an advertisement presentation system observes an intended recipient in proximity to a first location. As used herein, an "intended recipient" can include an individual, such as a person walking alone or selected from a group of people travelling together, or a group of people, such as a group of people walking together or a group of people in the same vehicle. As part of this observation, the recipient observation device determines one or more physical traits of the intended recipient, such as approximate age, gender, the presence or absence of certain accessories (e.g., eyeglasses, jewelry, etc.), the presence of medical conditions, and the like. The observation of the intended recipient also includes a determination of prior trajectory information, such as one or more of the intended recipient's current position, heading, and speed. From the determined physical traits, the advertisement presentation system selects a targeted advertisement to present to the intended recipient. From the prior trajectory related information, the advertisement presentation system determines an anticipated path or other trajectory of the intended recipient from the first location. The advertisement presentation system uses the anticipated trajectory to identify an advertisement presentation device positioned (or to be positioned) at a second location along the anticipated trajectory, and then provides for the presentation of the targeted advertisement by the identified advertisement presentation device at a time that the intended recipient is anticipated to be in proximity to the second location. In this manner, the advertisement presentation system is afforded sufficient time to observe the intended recipient, identify a suitable targeted advertisement, and provide for the presentation of the targeted advertisement to the intended recipient without requiring that the intended recipient remain in the same area as the original observation.

For ease of illustration, techniques are described herein the example context of commercial advertising, that is, the conveyance of information with the intent to induce the recipient to conduct a commercial transaction with the advertising sponsor. However, the illustrated techniques are not limited to a commercial context, but instead may be implemented for the presentation of any of a variety of types of targeted information, such as a public service announcement or public safety announcement or other public notice, a social networking or gaming message, and the like. As such, the term "advertisement" can include the conveyance of any of a variety of types of information, unless otherwise noted.

FIG. 1 illustrates an advertisement presentation system 100 providing targeted advertising in accordance with at least one embodiment of the present disclosure. The advertisement presentation system 100 comprises an advertisement server 102, a set of one or more recipient observation devices, such as recipient observation devices 104, 105, 106, 107, and 108 (collectively, "recipient observation devices 104-108"), and a set of one or more advertisement presentation devices, such as advertisement presentation devices 110, 111, 112, and 113 (collectively, "advertisement presentation devices 110-113"). The advertisement server 102, the recipient observation devices 104-108, and the advertisement presentation devices 110-113 can be a connected via one or a combination of networks 114, which may include the Internet or other wide area network (WAN), a local area network (LAN), and the like, and which may be implemented as wired networks or wireless networks, such as a Wi-Fi network or a cellular data network, or combinations thereof. The recipient observation devices 104-108 and the advertisement presentation devices 110-113 are installed or otherwise situated at corresponding locations of a communal space 116, which can include, for example, a mall, a campus, a public or private building, a stadium, a promenade, a street or block, a highway network or other roadway, and the like. Recipient observation devices and advertisement presentation devices may be paired or installed independently within the communal space 116. To illustrate, the recipient observation device 104 may be co-installed with the advertisement presentation device 110.

The recipient observation devices 104-108 can comprise any of a variety of information capture devices used to obtain observational information for an intended recipient 118 present in the vicinity of the recipient observation device and from which certain physical traits may be ascertained. These physical traits may comprise visually-ascertainable physical traits, such as gender, height, hair color, color of clothing, clothing type, presence or absence of facial hair, medical aids (e.g., eyeglasses, walker canes), jewelry, and other accessories, vehicle type or other vehicle information, and the like. Accordingly, some or all of the recipient observation devices 104-108 can include image capture devices (e.g. cameras) to capture imagery of an observed intended recipient 118 from which these physical traits may be ascertained. In some embodiments, the physical traits can comprise audio-ascertainable physical traits, such as gender (based on pitch of voice), shoe type (based on footstep sounds), place of origin (based on an accent detected in the observed entity's voice), and the like. Thus, some or all of the recipient observation devices 104-108 may include audio capture devices (e.g. microphones) to capture audio information of the observed intended recipient 118. Still further, the ascertained physical traits may include chemically-ascertained physical traits, such as the presence or type of perfume worn by the observed intended recipient 118, the presence or absence of certain medical conditions as indicated by certain chemical signatures (such as the elevated presence of ketone bodies in the breath of diabetics), and the like. Accordingly, some of all of the recipient observation devices 104-108 may include chemical receptor capture devices to detect the presence or absence of certain chemical signatures. Moreover, in some embodiments, the recipient observation devices 104-108 can include more than one type of receptor, such as a combination of an image capture device and an audio capture device. For ease of illustration, the recipient observation devices 104-108 are described herein as stationary, or subject to a fixed location (e.g., a video camera installed at a wall or ceiling of a public space). However, in other embodiments, some or all of the recipient observation devices 104-108 may be mobilized, such as a video camera carried by an employee in a public space, on a robot or other ambulatory device on the ground in the public space, or in a drone or other airborne device above a public space.

The advertisement presentation devices 110-113 can include devices used to present image-based advertising content, sound-based advertising content, and the like, to intended recipients in their vicinities. To illustrate, some or all of the advertisement presentation devices 110-113 can include display screens to display still imagery or video imagery and speaker devices to output audio content, the imagery and audio content together representing targeted advertising content. In other embodiments, some or all of the advertisement presentation devices 110-113 may be display-only devices or audio-only devices. As with the recipient observation devices, the advertisement presentation devices 110-113 are described herein as stationary, or subject to a fixed location (e.g., a display device installed at a kiosk in a public space). In other embodiments, however, some or all of the advertisement presentation devices 110-113 may be mobilized, such as a video display carried on cargo bed of a vehicle or in a drone or other airborne device above a public space.

In the depicted example, the advertisement server 102 is implemented as one or more computing systems 117, each computing system 117 including one or more processors 119 (e.g., a central processing device or CPU), one or more non-transitory computer-readable storage media 121, such as system memory or another storage device (e.g., flash memory, optical or magnetic disc drive, solid state hard drive, etc.), and other components, such as a network interface (e.g., a wireless local area network (WAN) interface or wired Ethernet interface), and a user interface (UI), all of which may be connected via one or more busses or other interconnects. The processor 119 executes a set of executable instructions stored at a computer-readable storage medium 121, such as the system memory or flash memory, whereby the set of executable instructions represent one or more software programs. The software programs, when executed, manipulate the processor 119 to perform various software-based functionality to implement at least a portion of the techniques described herein, provide visual information via a display device, respond to user input via the UI, and the like. One of ordinary skill, notwithstanding possibly significant effort and many design choices motivated by, for example, available time, current technology, and economic considerations, when guided by the concepts and principles disclosed herein will be readily capable of generating such software instructions and programs minimal experimentation. Therefore, in the interest of brevity and minimization of any risk of obscuring the principles and concepts according to the present disclosure, further discussion of such software, if any, will be limited with respect to the principles and concepts disclosed herein.

In operation, the advertisement server 102 uses input from the recipient observation devices 104-108 to select intended recipients of targeted advertising from potential recipients present in the communal space 116 and determine physical traits of the intended recipients. From these physical traits, the advertisement server 102 selects targeted advertisements for the intended recipients and then uses the advertisement presentation devices 110-113 to present the targeted advertisements to the intended recipients. However, in recognition that the intended recipients may not stay put in the location in which they were observed, the advertisement server 102 also uses the observations of the intended recipients afforded by the recipient observation devices 104-108 to anticipate their corresponding trajectories, and from the anticipated trajectories, select advertisement presentation devices along their expected paths and then time the presentations of the targeted advertisements so that they are presented when the intended recipients are expected to be in proximity to the locations served by the corresponding advertisement presentation device. In this manner, the targeted advertising process does not require the intended recipient remain stationary in order to receive a targeted advertisement.

To illustrate, FIG. 1 depicts an example whereby the intended recipient 118 arrives at an initial observation location 120 observed by the recipient observation device 104, which in this example comprises a video camera to capture video imagery of the intended recipient 118. The advertisement server 102 analyzes this video imagery to detect one or more physical traits of the intended recipient 118, such as detecting that the intended recipient is an adult female with fair skin and red hair. Given this physical trait information, along with weather information indicating that it is a sunny summer day and map information indicating that the communal space 116 is proximate to a beach, the advertisement server 102 may select from these factors a targeted still-image advertisement for discounted sunscreen from a pharmacy located in the communal space 116.

However, given the walking speed of the intended recipient 118, there likely is insufficient time to effectively present the still-image advertisement at the co-located advertisement presentation device 110. Accordingly, the advertisement server 102 also analyzes the video imagery to determine a prior trajectory 122 of the intended recipient 118 when arriving at the location 120. This analysis can be performed using, for example, distance markers present in the scene (e.g., markers permanently marked on the floor of the communal space 116 for this purpose), through motion estimation of a sequence of images captured of the intended recipient 118, and the like. From this analysis, the advertisement server 102 determines the vector and speed of approach of the intended recipient 118, which together constitute the prior trajectory 122. From this prior trajectory 122, the advertisement server 102 estimates an anticipated trajectory 124 of the intended recipient 118 upon leaving the initial observation location 120. The estimation of the anticipated trajectory 128 may also be determined on other information, such as information representing a layout or path structure of the communal space 116.

With the anticipated trajectory 124, the advertisement server 102 identifies whether any advertisement presentation devices lay near a path defined by the anticipated trajectory 124, and if there are multiple advertisement presentation devices so identified, selects an appropriate advertisement presentation device. In the illustrated example, the advertisement presentation device 112 is located in proximity to a path represented by the anticipated trajectory 124, and thus is selected by the advertisement server 102. Using the estimated speed of the intended recipient 118 and the path length between the initial observation location 120 and a presentation location 126 served by the advertisement presentation device 112 and along the anticipated trajectory 124, the advertisement server 102 estimates the time remaining until the intended recipient 118 arrives at the presentation location 126, and then times the presentation of the still-image sunscreen discount advertisement at the advertisement presentation device 112 so as to coincide with the anticipated arrival of the intended recipient 118 at the presentation location 126. As such, the advertisement server 102 has sufficient time to identify physical traits of the intended recipient 118 at one location, select a targeted advertisement based on these physical traits, and then arrange for the subsequent timely presentation of the selected targeted advertisement at a separate location, thereby more likely ensuring that the intended recipient 118 receives the target advertisement.

Although the passage above describes embodiments wherein the advertisement server 102 selects the targeted advertisement and the advertisement presentation device to present the targeted advertisement based on the physical trait information and the anticipated trajectory 124, in other embodiments one or both the of the selection of the targeted advertisement and the advertisement presentation device instead may be delegated to the advertisement presentation devices 110-113. To illustrate, rather than having the advertisement server 102 identify the advertisement presentation device that is to present a targeted advertisement, the advertisement server 102 instead may distribute vector information to the advertisement presentation devices 110-113, and the advertisement presentation devices 110-113 may then autonomously decide whether they will be in proximity to a location in the path at the time the intended recipient 118 is at that location, and if so, provide the targeted advertisement to the intended recipient 118 at that time. This is particularly advantageous for mobile advertisement presentation devices that may have paths or other movement plans that are not known to the advertisement server 102. Moreover, the selection of the targeted advertisement to be presented to the intended recipient 118 may be delegated to the advertisement presentation devices.

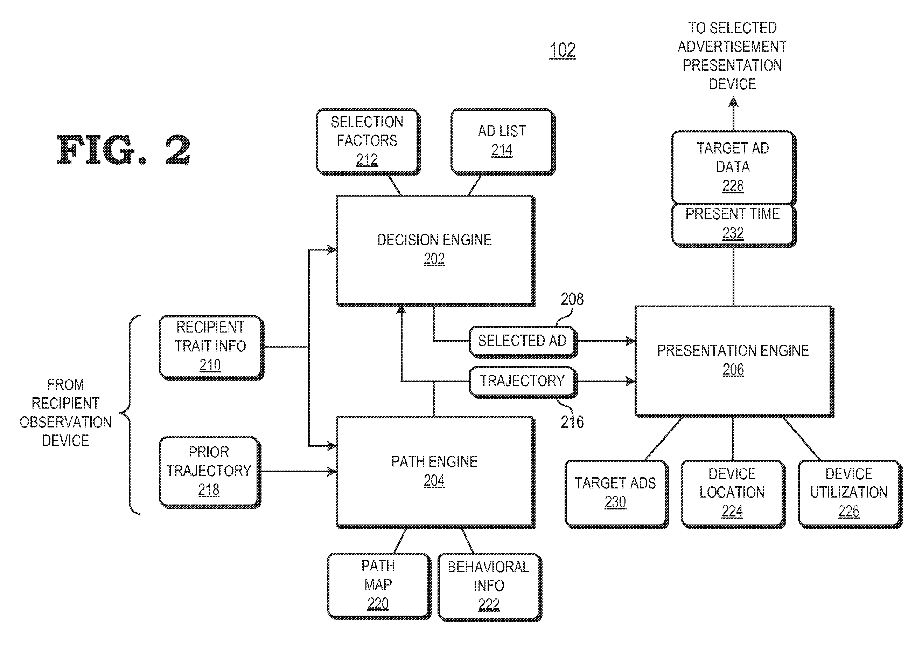

FIG. 2 illustrates an example implementation of the advertisement server 102 of the advertisement presentation system 100 of FIG. 1 in accordance with at least one embodiment of the present disclosure. In the depicted example, the advertisement server 102 comprises a decision engine 202, a path engine 204, and a presentation engine 206 (collectively, "engines 202-206"). The engines 202-206 may be implemented as hardcoded hardware, such as an application specific integrated circuit (ASIC) or programmable logic device (PLD), one or more computing systems 117 (FIG. 1) comprising one or more processors 119 executing software programs stored in a non-transitory computer readable storage medium (121) and coded to manipulate the one or more processors 119 to perform the techniques described herein, or a combination thereof.

The decision engine 202 is configured to select a targeted advertisement 208 for an intended recipient based on one or more physical traits discerned from observation of the intended recipient by at least one recipient observation device in an initial location. To this end, the decision engine 202 receives recipient trait information 210 from the recipient observation device. In some embodiments, the recipient observation device captures raw observation information (e.g., video imagery) and provides this raw observation information as the recipient trait information 210 to the decision engine 202. The decision engine 202 or other component of the advertisement server 102 then performs the analysis of the raw observation information to determine the physical traits of the observed intended recipient. In other embodiments, the recipient observation device analyzes the raw observation information to identify the physical traits, and then provides indicators of these identified physical traits as the recipient trait information 210. As noted above, in some implementations the selection of the targeted advertisement 208 is delegated to the advertisement presentation devices, and in such instances the decision engine 202 may instead be implemented in the advertisement presentation device.

The identification of physical traits of the intended recipient can be performed using any of a variety or combination of techniques. For image-based observation data, object-based physical traits, such as presence of glasses, hair color, clothing type, height, gender, and relative age, may be identified from still-image analysis using object recognition or facial recognition techniques. Motion-based physical traits, such as gait, may be determined from motion estimation or multiple-image analysis. Audio information, in the form of recorded conversation or verbalizations from the intended recipient may be analyzed to determine certain traits, such as gender, place of origin, and the like. Chemical trace or chemical signature information captured by the recipient observation device may be used to identify the use of perfume, whether the intended recipient is a smoker, determine the likely presence of certain medical conditions in the intended recipient, and the like.

With the intended recipient's physical traits so determined, the decision engine 202 applies advertisement selection factors 212 to the identified physical traits to select the target advertisement 208 from a list 214 or other datastore of target advertisements available for selection. The advertisement selection factors 212 may also represent factors other than those related to physical traits. To illustrate, weather, time of day, date of week, previous advertisements presented, and the like, may factor into the targeted advertisement selection process. Further, an anticipated trajectory 216 of the intended recipient may factor into the advertisement selection process. To illustrate, that the intended recipient has a pronounced limp and that the anticipated trajectory 216 of the intended recipient will bring the intended recipient into the vicinity of a chiropractor may ultimately result in the selection of a targeted advertisement from the chiropractor for presentation to the intended recipient.

In some embodiments, the targeted advertisement 208 may be selected on the basis of a weighted scoring system, whereby each factor is given a corresponding weight, and the match, or degree of match, between the corresponding factor and a corresponding trait of the intended recipient, and which also may be scaled based on an arrangement between the advertisement sponsor and the operator of the advertisement presentation system 100. To illustrate, the scoring equation for a hair salon providing an advertisement for discounted hair coloring services may be expressed as:

$$hair\_coloring\_score = 0.75 * (is\_girl) + 0.5 * (near\_closing\_time)$$

where is_girl is a binary operator representing whether the observed recipient is female and near_closing_time is a binary operator representing whether it is within one hour of closing time of the hair salon. Similarly, the scoring equation for a chiropractor providing an advertisement for 25% off chiropractic services may be expressed as:

$$chiropractor\_score = 0.25 + 0.5 * (noticeable\_limp)$$

where noticeable_limp is a binary operator representing whether the observed recipient has a limp or other hitch in his or her gait. Thus, for an intended recipient who is a female and is observed near closing time without any gait issues, the corresponding scores would be:

$$hair\_coloring\_score = 0.75 * (1) + 0.5 * (1) = 1.25$$

$$chiropractor\_score = 0.25 + 0.5 * (0) = 0.25$$

Thus, because the hair coloring advertisement has a higher score in this example, the decision engine 202 would select the hair coloring advertisement as the targeted advertisement to be presented to this intended recipient. However, if the intended recipient were a male without a limp and it was not near closing time, the corresponding scores would be:

$$hair\_coloring\_score = 0.75 * (0) + 0.5 * (0) = 0$$

$$chiropractor\_score = 0.25 + 0.5 * (0) = 0.25$$

and thus because the chiropractor score has the higher score of the two in this instance, the decision engine 202 would select the chiropractor advertisement as the targeted advertisement for this intended recipient.

The path engine 204 is configured to determine an anticipated trajectory 216 for the intended recipient. To this end, the path engine 204 receives prior trajectory information 218 from one or more recipient observation devices. The prior trajectory information 218 includes trajectory information at the time that the intended recipient arrived at the initial location for which the observation data was captured. Such trajectory information can include, for example, the bearing or direction in which the intended recipient was traveling, the speed of travel, the attitude of the intended recipient (e.g., whether the intended recipient was leaning to a particular side or looking to a particular side), and the like. Because the intended recipient's trajectory may be prescribed or defined in some manner by roads or other defined paths in the communal space 116, the path engine 204 also may make use of path map information 220 to determine what path the intended recipient is on and what paths lay ahead of the intended recipient. Further, the path engine 204 may make use of behavioral information 222 representing statistical information or other prior behavioral information of the trajectories or paths taken by similarly-situated observed entities. This behavioral information may also reflect certain physical traits of the observed. To illustrate, the path engine 204 may have previously observed (from previous observations by the recipient observation devices in the communal space 116) that 72% of men observed at the initial location veer to the left upon leaving the initial location, whereas 28% of men veer to the right. Using this information, upon detecting the intended recipient as being a male, the path engine 204 may use this behavioral information to estimate the anticipated trajectory 216 of the intended recipient as bearing to the left from the observed location. As another example, the behavioral information 222 may indicate that 90% of the observed exhibited a 20% decrease in velocity upon reaching the observed location (e.g., the observed location is at a point whereby a path narrows or becomes more crowded), and thus the path engine 204 may use this information when calculating the speed component of the anticipated trajectory 216.

The presentation engine 206 operates to use the anticipated trajectory 216 to provide for the display of the selected targeted advertisement 208 to the intended recipient. To this end, the presentation engine 206 has access to a datastore storing device location information 224 identifying the locations or positions of the advertisement presentation devices within the communal space 116. The device location information 224 may comprise static location information for advertisement presentation devices having fixed locations, and current location, path, or other vector information for mobile advertisement presentation devices (e.g., drones or vehicle-mounted displays). From this information, and from the anticipated trajectory 216, the presentation engine 206 identifies an advertisement presentation device that presents advertisements to a location in the vicinity of the anticipated trajectory 216. In some instances, there may be more than one suitable candidate advertisement presentation device. In such instances, the presentation engine 206 may consider other factors in selecting the advertisement presentation device. To illustrate, the presentation engine 206 may maintain device utilization information 226 identifying the current utilization of the advertisement presentation devices, and use this information to select an advertisement presentation device that is not fully utilized. As another example, the targeted advertisement may be sourced by a business or other advertisement sponsor operating in the communal space 116, and thus the presentation engine 206 may select the advertisement presentation device closest to the advertisement sponsor for maximum advertising impact.

With the targeted advertisement 208 and the advertisement presentation device selected, the presentation engine 206 uses the anticipated trajectory 216 to estimate the time of arrival of the intended recipient in the location served by selected advertisement presentation device and provides for the presentation of the targeted advertisement 208 by the selected advertisement presentation device at that estimated time of arrival. The estimated arrival time may be determined by the presentation engine 206 based on, for example, a determination of the path distance between the initial observation location and the advertisement presentation location and the speed of the intended recipient as represented by the anticipated trajectory. To illustrate, assuming the presentation engine 206 determines from the device location information 224 that the initial observation location and the presentation location are 30 meters apart and the anticipate trajectory 216 anticipates that the intended recipient is walking in a straight line to the presentation location at a speed of 1 meter/second, then the presentation engine 206 would determine that the intended recipient would arrive at the presentation location 30 seconds after leaving the initial observation location, and thus time the presentation of the targeted advertisement accordingly.

The timing of the presentation of the targeted advertisement 208 is handled depending on the configuration of the advertisement server 102 and the advertisement presentation devices, and the manner in which targeted advertisement data 228 is delivered to the advertisement presentation devices. In instances whereby the targeted advertisement data 228 is streamed to the selected advertisement presentation device and then presented by the selected advertisement presentation device in real time, the presentation engine 206 can queue the targeted advertisement 208 in a local queue so as to begin streaming of the targeted advertisement data from a targeted advertisement datastore 230 to the advertisement presentation device at the appointed time. In instances whereby the targeted advertisement data 228 is buffered or otherwise stored at the advertisement presentation device beforehand, the presentation engine 206 can provide for the presentation of the targeted advertisement 208 at the estimated arrival time by directing the advertisement presentation device to queue the targeted advertisement for presentation at the appointed time via, for example, a present time command 232 that includes a time stamp or other identifier of the intended start time for the targeted advertisement 208.

In some instances, the intended recipient may deviate from the anticipated trajectory (e.g., the intended recipient may slow down, take a new heading, etc.). In such instances, the path engine 204 detects the deviation, and calculates a revised anticipated trajectory from the new observational information. In response to the modified anticipated trajectory, the presentation engine 206 revises its selection of the anticipated advertisement presentation device (if necessary under the new anticipated trajectory) and recalculates the timing of presentation of the selected advertisement accordingly. Moreover, if the selected advertisement is a location-based advertisement (e.g., based on the anticipated trajectory), the decision engine 202 also may update which advertisement is selected as the targeted advertisement based on the revised anticipated trajectory.

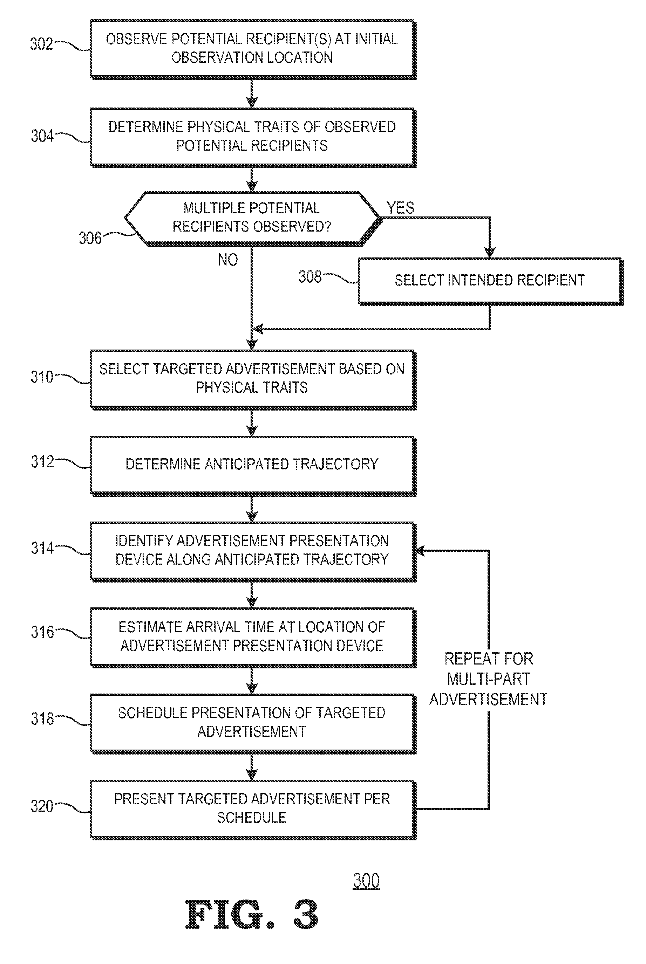

FIG. 3 illustrates an example method 300 for the selection and presentation of targeted advertising in accordance with at least one embodiment of the present disclosure. For ease of illustration, the method 300 is described herein in the example context of the advertisement presentation system 100 of FIG. 1 and the advertisement server 102 of FIG. 2. The method 300 initiates at block 302 with the observation of one or more potential recipients at an initial observation location (e.g., location 120 of FIG. 1) by a recipient observation device (e.g., recipient observation device 104). At block 304, the recipient observation device or the advertisement server 102 determines the physical traits of the observed potential recipients. As noted above, this analysis can include still imagery analysis, video analysis, audio analysis, chemical analysis, and the like.

In some instances, multiple independent potential recipients may be observed. To illustrate, the recipient observation device may be situated along a pathway such that multiple people walking down the pathway may be observed and analyzed simultaneously. However, in order for the targeted advertising to be effective, the targeted advertising may need to be limited to being targeted to an individual, or a subset, of the observed individuals. Accordingly, at block 306 the decision engine 202 determines whether there were multiple potential recipients observed and analyzed at blocks 302 and 304. If so, at block 308 the decision engine 202 selects one, or a subset, of the multiple potential recipients as the intended recipient to target for advertising. Typically, the selection of an individual as the intended recipient is based on indicia of the likelihood or impact of success of the targeted advertising. For example, if the physical trait analysis indicates that a particular individual has indicia of greater affluence than the others, or has particular physical traits that correlate to a particularly effective or pertinent targeted advertisement, then selection rules applied by the decision engine 202 are more likely to lead to the selection of this person.

With the intended recipient selected or otherwise identified, at block 310 the decision engine 202 selects a targeted advertisement for the intended recipient based on the physical traits of the intended recipient. This selection process may also include other factors, such as weather, time/date, anticipated trajectory (see block 312 below), and the like. As noted above, these factors may be incorporated into a weighted scoring process used to identify the most appropriate targeted advertisement.

At block 312, the path engine 204 determines the anticipated trajectory of the intended recipient from the initial observation location. The anticipated trajectory can include, for example, a speed and an indication of bearing from the initial observation location. As another example, in the event that the communal area 116 has defined paths (e.g., the intended recipient is traveling in a car on a street grid), the path engine 204 may use the initial observation location, and prior trajectory information, and one or more roadway maps or other path map information to estimate an anticipated trajectory that specifies or defines a path and an anticipated speed along this path, or that defines a series of way points and time of arrival at each waypoint. Further, external information, such as traffic congestion information, may be used to adjust the estimated speed represented in the anticipated trajectory.

At block 314, the presentation engine 206 uses the anticipated trajectory and device location information to identify an advertisement presentation device that is situated along the anticipated trajectory. In some instances, there may be multiple advertisement presentation devices that service locations in the vicinity of the anticipated trajectory, in which case the presentation engine 206 may select one of these advertisement presentation devices based on other factors, such as proximity to the advertisement sponsor, current utilization or current availability, type or characteristics (e.g., screen size) of the device, and the like.

At block 316, the presentation engine 206 determines the path distance between the initial observation location (e.g., location 120 of FIG. 1) and the presentation location (e.g., location 126 of FIG. 1) served by the selected advertisement presentation device, and from this path distance and the anticipated speed of the intended recipient, estimate the arrival time of the intended recipient at the presentation location. At block 318 the presentation engine 206 schedules presentation of selected targeted advertisement by the selected advertisement presentation so as to occur at or near the estimated arrival time, and at block 320 the selected targeted advertisement is presented by the advertisement presentation device at the specified time. In some embodiments, the presentation engine 206 manages this scheduling by locally queuing the targeted advertisement and then streaming or otherwise transmitting the targeted advertisement to the selected advertisement presentation device at or immediately prior to the estimated arrival time. In other embodiments, the presentation engine 206 instructs the selected advertisement presentation device to present the selected advertisement at the specified time, and the selected advertisement presentation device is responsible for queuing, accessing, and presenting the selected target advertisement at the specified time.

In some instances, the targeted advertisement may be a multi-part advertisement, with each part intended for separate presentation at a different point along the anticipated trajectory. To illustrate, the targeted advertisement may be a video that has been segmented into three segments under the expectation that an intended viewer will not be able to consume the entire video in the time that the intended viewer is walking by an advertisement presentation device. In this example, the advertisement server 102 may repeat the process of blocks 314, 316, 318, and 320 for each segment so that each of the three segments is displayed in sequence by three advertisement presentation devices in sequence along the anticipated trajectory of the intended recipient.

As noted above, rather than selecting the advertisement presentation device at the advertisement server 102, the advertisement server 102 instead can provide vector information or information regarding an anticipated presentation window based on the anticipated trajectory to the advertisement presentation devices, and the advertisement presentation devices then may determine whether they are, or will be, along the path represented by the anticipated trajectory, and autonomously elect to present a targeted advertisement accordingly.

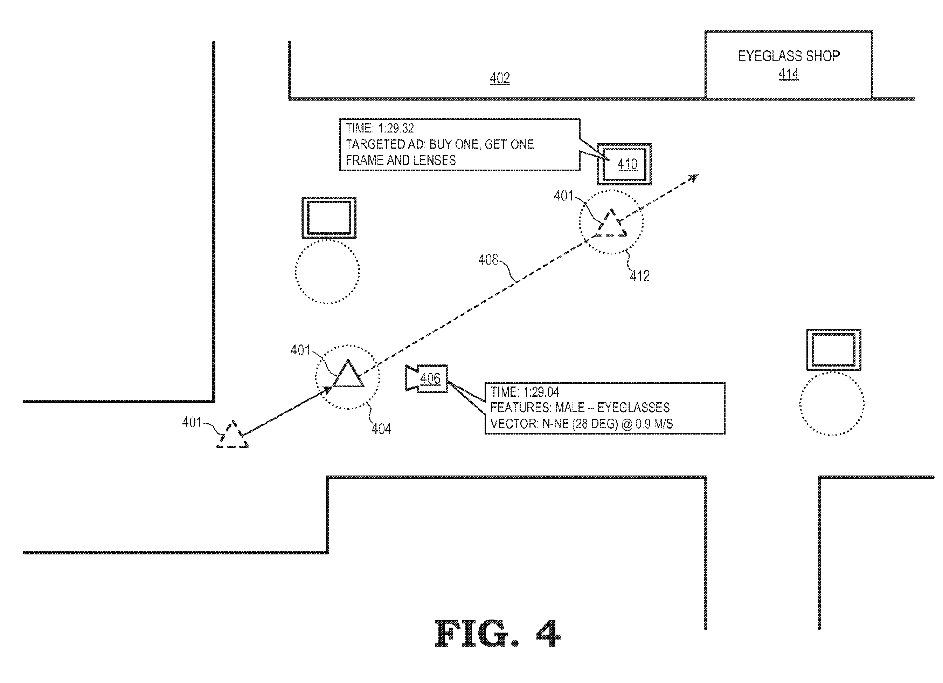

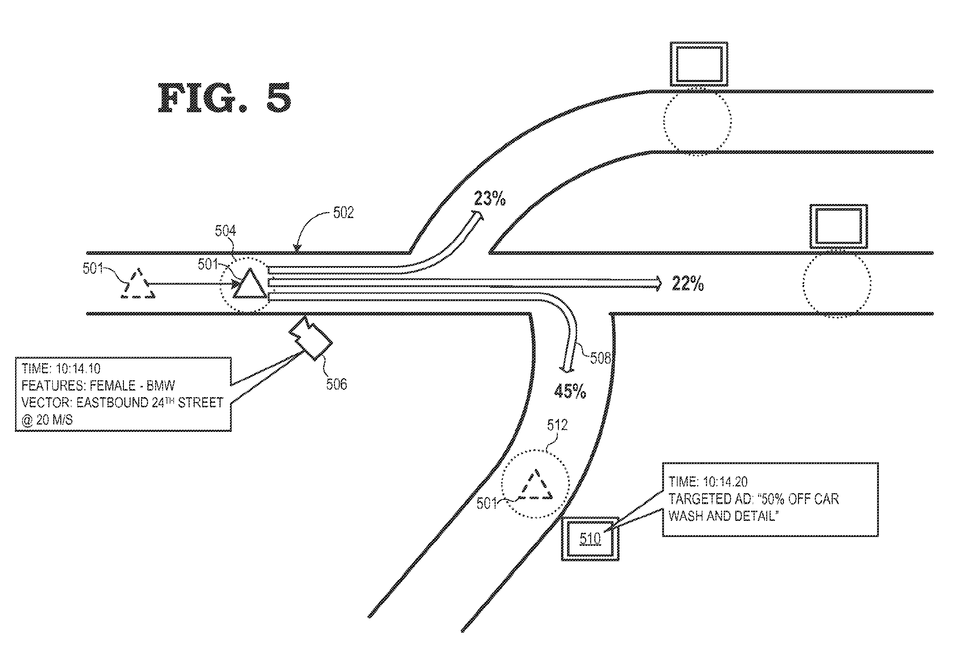

FIGs. 4 and 5 illustrate two example scenarios for targeted advertising using the techniques described above. FIG. 4 depicts a scenario whereby a pedestrian 401 (one embodiment of an intended recipient) is walking through a shopping mall 402 (one embodiment of a communal area). At an initial observation location 404, video imagery of the pedestrian 401 is captured by a recipient observation device 406. From this video imagery, the recipient observation device 406 determines that the pedestrian 401 has the physical traits of being a male and wearing eyeglasses. The recipient observation device 406 or the advertisement server 102 (FIG. 1) also determines from motion estimation or object recognition performed on the video imagery that the pedestrian 401 had a prior trajectory of heading N-NE at 28 degrees at a speed of 0.9 meters/second.

Because the area in which the pedestrian 401 is open and because the pedestrian 401 did not exhibit any indicia in this example that the pedestrian 401 was about to change course (e.g., as indicated by, for example, a turned head), the advertisement server 102 assumes that the pedestrian 401 is going to maintain his current bearing and speed, and estimates an anticipated trajectory 408 accordingly. With this anticipated trajectory 408, the advertisement server 102 identifies a display kiosk (one example of an advertisement presentation device) that serves a presentation location 412 along the anticipated trajectory 408.

The advertisement server 102 applies various selection rules to the observed physical traits of the pedestrian and other factors (such that the anticipated trajectory 408 will take the pedestrian 401 by an eyeglass shop 414) to select a "buy one-get-one-free" display advertisement as the targeted advertisement for the pedestrian 401. In this example, the initial observation location 404 and the presentation location 412 are twenty-five (25) meters apart, and from this fact and from the observed speed of 0.9 meters/second for the pedestrian 401, the advertisement server 102 estimates that the pedestrian 401 will arrive at the presentation location 412 twenty-eight (28) seconds after leaving the initial observation location 404 at 1:29.04 PM. Accordingly, the advertisement server 102 queues the display advertisement for display at 1:29.32 PM with the intent to have the pedestrian 401 observe the advertisement and be influenced to stop by the eyeglass shop 414.

FIG. 5 depicts a scenario whereby a vehicle driver 501 (one embodiment of an intended recipient) is driving a vehicle along a roadway 502 (one embodiment of a communal area). At an initial observation location 504, still imagery of the vehicle driver 501 is captured by a recipient observation device 506. Through the application of facial recognition algorithms and object recognition algorithms to this still imagery, the advertisement server 102 (FIG. 1) determines that the vehicle driver 501 has the physical traits of being a female driving a BMW sedan. In this example, the physical traits of driving a BMW leads the advertisement server 102 to select as the targeted advertisement for the vehicle driver 50 a still-image advertisement for a discounted car wash and detail.

The recipient observation device 506 or the advertisement server 102 also determines from a radar device (one embodiment of a recipient observation device) and the direction and location of the radar device that the vehicle driver 501 had a prior trajectory of traveling eastbound on 24th street at a speed of 20 meters/second. In this scenario, the vehicle driver's possible subsequent trajectories are constrained by the paths defined by the roadway 502. In the depicted example, roadway map information specifies that the roadway 502 provides three alternate paths: straight ahead; a left exit; and a right exit. In this scenario, the advertisement server 102 uses prior behavioral statistics to anticipate which path the vehicle driver 501 will take. For this example, the prior behavioral statistics indicate that 23% of all female drivers take the left exit, 22% of all female drivers proceed straight ahead, and 45% of all female drivers take the right exit. From this information, the advertisement server 102 anticipates that the vehicle driver 501 will take the right exit (this being the anticipated trajectory 508). With this estimate, the advertisement server 102 selects a display device 510 serving a presentation location 512 along the roadway after the right exit.

With the targeted advertisement selected and the presentation location 512 identified, the advertisement server 102 needs to determine the anticipated arrival time of the vehicle driver 501 at the presentation location 512. In this example, the prior behavioral statistics maintained by the advertisement server 102 indicate that, on average, a driver driving a luxury sedan will take the right exit at a speed of 15 meters per second. With this information, and with the distance between the initial observation location 504 and the presentation location 512, the advertisement server 102 estimates that the vehicle driver 501 will arrive at the presentation location 412 ten (10) seconds after leaving the initial observation location 504 at 10:14.10 AM. Accordingly, the advertisement server 102 queues the still-image advertisement for display at 10:14.20 AM with the intent to have the vehicle driver 501 observe the advertisement and be influenced to stop by the car wash.

In some embodiments, certain aspects of the techniques described above may implemented by one or more processors of a processing system executing software. The software comprises one or more sets of executable instructions stored or otherwise tangibly embodied on a non-transitory computer readable storage medium. The software can include the instructions and certain data that, when executed by the one or more processors, manipulate the one or more processors to perform one or more aspects of the techniques described above. The non-transitory computer readable storage medium can include, for example, a magnetic or optical disk storage device, solid state storage devices such as Flash memory, a cache, random access memory (RAM) or other non-volatile memory device or devices, and the like. The executable instructions stored on the non-transitory computer readable storage medium may be in source code, assembly language code, object code, or other instruction format that is interpreted or otherwise executable by one or more processors.

In this document, relational terms such as "first" and "second", and the like, may be used solely to distinguish one entity or action from another entity or action without necessarily requiring or implying any actual relationship or order between such entities or actions or any actual relationship or order between such entities and claimed elements. The term "another", as used herein, is defined as at least a second or more. The terms "including", "having", or any variation thereof, as used herein, are defined as comprising.

Other embodiments, uses, and advantages of the disclosure will be apparent to those skilled in the art from consideration of the specification and practice of the disclosure disclosed herein. The specification and drawings should be considered as examples only, and the scope of the disclosure is accordingly intended to be limited only by the following claims and equivalents thereof.

Note that not all of the activities or elements described above in the general description are required, that a portion of a specific activity or device may not be required, and that one or more further activities may be performed, or elements included, in addition to those described. Still further, the order in which activities are listed are not necessarily the order in which they are performed.

Also, the concepts have been described with reference to specific embodiments. However, one of ordinary skill in the art appreciates that various modifications and changes can be made without departing from the scope of the present disclosure as set forth in the claims below. Accordingly, the specification and figures are to be regarded in an illustrative rather than a restrictive sense, and all such modifications are intended to be included within the scope of the present disclosure.

Benefits, other advantages, and solutions to problems have been described above with regard to specific embodiments. However, the benefits, advantages, solutions to problems, and any feature(s) that may cause any benefit, advantage, or solution to occur or become more pronounced are not to be construed as a critical, required, or essential feature of any or all the claims.

## Claims

1. A computer-implemented method comprising:

   selecting a targeted advertisement based on at least one physical trait of an intended recipient;
   determining an anticipated trajectory of the intended recipient from a first location based on an observation of the intended recipient at the first location; and
   presenting the targeted advertisement for the intended recipient at a second location selected based on the anticipated trajectory.

2. The method of claim 1, further comprising:

   identifying a set of one or more advertisement sponsors proximate to a path indicated by the anticipated trajectory; and
   wherein selecting the targeted advertisement comprises:

      selecting the targeted advertisement further based on the set of one or more advertisement sponsors;

3. The method of claim 1 or 2, wherein selecting the targeted advertisement comprises:

   determining the at least one physical trait based on image analysis of at least one image frame captured of the intended recipient in proximity to the first location;
   determining the at least one physical trait based on audio analysis of audio content captured from the intended recipient in proximity to the first location; and/or
   determining the at least one physical trait based on chemical analysis of a chemical signature captured from the intended recipient in a location proximate to the first location.

4. The method of any preceding claim, wherein determining the anticipated trajectory of the intended recipient comprises determining the anticipated trajectory of the intended recipient based on motion analysis of a video imagery of the intended recipient in proximity to the first location.

5. The method of any preceding claim, wherein determining the anticipated trajectory of the intended recipient comprises determining the anticipated trajectory of the intended recipient based on a location of the intended recipient on a path map; optionally the path map comprises a roadway map.

6. The method of any preceding claim, wherein determining the anticipated trajectory of the intended recipient comprises determining the anticipated trajectory of the intended recipient based on at least one previous observation of a trajectory taken by at least one prior observed entity in proximity to the first location.

7. The method of any preceding claim, wherein the targeted advertisement comprises at least one of a visual advertisement and an audio advertisement.

8. The method of any preceding claim, wherein presenting the targeted advertisement for the intended recipient at the second location comprises:

identifying an advertisement presentation device available along the anticipated trajectory of the intended recipient, the advertisement presentation device serving the second location;
determining an estimated arrival time of the intended recipient at the second location based on the anticipated trajectory; and
queuing the targeted advertisement for presentation by the advertisement presentation device based on the estimated arrival time.

9. A targeted advertising system comprising:

a decision engine to select a targeted advertisement based on at least one physical trait of an intended recipient;
a path engine to determine an anticipated trajectory of the intended recipient in a communal space from a first location based on an observation of the intended recipient at the first location; and
a presentation engine to provide the targeted advertisement for presentation of the intended recipient at a second location selected based on the anticipated trajectory.

10. The targeted advertising system of claim 9, further comprising:

a set of one or more advertisement presentation devices, each advertisement presentation device situated in a corresponding location of the communal space; and
wherein the presentation engine is to select an advertisement presentation device in proximity to a path represented by the anticipated trajectory for presentation of the selected targeted advertisement.

11. The targeted advertising system of claim 9 or 10, further comprising:

a set of one or more recipient observation devices, each recipient observation device situated at a corresponding location of the communal space; and
wherein the decision engine is determine the at least one physical trait of the intended recipient based on observational information obtained of the intended recipient by a recipient observation device that is in proximity to the first location;
optionally the set of one or more recipient observation devices comprises at least one of: an image capture device; an audio capture device; and a chemical receptor capture device.

12. The targeted advertisement system of claim 11, wherein the recipient observation device in proximity to the first location comprises an image capture device, and the decision engine is to determine at least one physical trait of the intended recipient based on analysis of imagery of the intended recipient captured by the image capture device; optionally the path engine is to determine the anticipated trajectory of the intended recipient based on motion analysis of the imagery.

13. The targeted advertisement system of claim 9 to 12, wherein the path engine is to determine the anticipated trajectory of the intended recipient based on a location of the intended recipient on a path map.

14. The targeted advertisement system of claim 9 to 12, wherein the presentation engine is to present the targeted advertisement for the intended recipient at the second location by:

identifying an advertisement presentation device available along the anticipated trajectory of the intended recipient, the advertisement presentation device serving the second location;
determining an estimated arrival time of the intended recipient at the second location based on the anticipated trajectory; and
queuing the targeted advertisement for presentation by the advertisement presentation device based on the estimated arrival time.

15. A computer readable storage medium storing a set of executable instructions, the set of executable instructions to manipulate at least one processor to perform a method according to any of claims 1 to 8.

FIG. 1

EP 2 869 256 A1

**FIG. 2**

102

TO SELECTED
ADVERTISEMENT
PRESENTATION
DEVICE

SELECTION
FACTORS
212

AD LIST
214

TARGET AD
DATA
228

PRESENT TIME
232

DECISION ENGINE
202

208

FROM
RECIPIENT
OBSERVATION
DEVICE

RECIPIENT
TRAIT INFO
210

SELECTED AD

TRAJECTORY

216

PRESENTATION ENGINE
206

PRIOR
TRAJECTORY
218

PATH ENGINE
204

PATH
MAP
220

BEHAVIORAL
INFO
222

TARGET ADS
230

DEVICE
LOCATION
224

DEVICE
UTILIZATION
226

EP 2 869 256 A1

13

302 — OBSERVE POTENTIAL RECIPIENT(S) AT INITIAL OBSERVATION LOCATION

304 — DETERMINE PHYSICAL TRAITS OF OBSERVED POTENTIAL RECIPIENTS

306 — MULTIPLE POTENTIAL RECIPIENTS OBSERVED? — YES

NO

308 — SELECT INTENDED RECIPIENT

310 — SELECT TARGETED ADVERTISEMENT BASED ON PHYSICAL TRAITS

312 — DETERMINE ANTICIPATED TRAJECTORY

314 — IDENTIFY ADVERTISEMENT PRESENTATION DEVICE ALONG ANTICIPATED TRAJECTORY

316 — ESTIMATE ARRIVAL TIME AT LOCATION OF ADVERTISEMENT PRESENTATION DEVICE

REPEAT FOR MULTI-PART ADVERTISEMENT

318 — SCHEDULE PRESENTATION OF TARGETED ADVERTISEMENT

320 — PRESENT TARGETED ADVERTISEMENT PER SCHEDULE

300

# FIG. 3

FIG. 4

# FIG. 5

TIME: 10:14.10
FEATURES: FEMALE - BMW
VECTOR: EASTBOUND 24$^{TH}$ STREET
@ 20 M/S

23%

22%

45%

TIME: 10:14.20
TARGETED AD: "50% OFF CAR
WASH AND DETAIL"

EP 2 869 256 A1

Europäisches
Patentamt

European
Patent Office

Office européen
des brevets

## EUROPEAN SEARCH REPORT

Application Number

EP 14 19 0999

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| | The technical aspects of the claimed subject-matter, understood in the light of the description, are wholly anticipated by an arrangement consisting of data capturing means and data processing means, said processing based on a set of non-technical (i.e marketing) rules. Such an arrangement would have been notoriously known to the skilled person at the priority date of the application (2013); no documentary evidence is therefore considered necessary. (See Official Journal EPO 11/2007, pages 592ff and 594ff)<br><br>----- | | INV.<br>G06Q30/02 |

TECHNICAL FIELDS
SEARCHED      (IPC)

G06Q

The present search report has been drawn up for all claims

| Place of search | Date of completion of the search | Examiner |
|---|---|---|
| The Hague | 4 March 2015 | Falierou, Christina |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P04C01)